# FASCICULE DE BREVET EUROPEEN

(11) **EP 2 102 502 B1**
(45) Date de publication et mention de la délivrance du brevet: **20.03.2019**
(21) Numéro de dépôt: 07858545.2
(22) Date de dépôt: 10.10.2007
(51) Int. Cl.: H02P 31/00, F04B 35/04

(54) **PROCÉDÉ D'AMORTISSEMENT DU DÉPLACEMENT D'UN PISTON D'UN MOTEUR ÉLECTRODYNAMIQUE LINÉAIRE SOUS L'ACTION D'UNE FORCE EXTÉRIEURE**
VERFAHREN ZUM ABFANGEN DER VERSCHIEBUNG EINES KOLBENS IN EINEM ELEKTRODYNAMISCHEN LINEARMOTOR UNTER DEM EINFLUSS EINER EXTERNEN KRAFT
METHOD FOR ABSORBING THE DISPLACEMENT OF A PLUNGER IN A LINEAR ELECRODYNMIC MOTOR UNDER THE INFLUENCE OF AN EXTERNAL FORCE

(30) Priorité: 05.12.2006 FR 0655325
(43) Date de publication de la demande: 23.09.2009
(73) Titulaire: L'AIR LIQUIDE, Société Anonyme pour l'Etude et l'Exploitation des Procédés Georges Claude, 75007 Paris (FR)
(72) Inventeur: AIGOUY, Gérald, 38290 Crolles (FR); BUQUET, Jonathan, 38140 La Murette (FR); TROLLIER, Thierry, 38320 Eybens (FR)
(74) Mandataire: De Cuenca, Emmanuel Jaime
(86) Numéro de dépôt international: PCT/FR2007/052115
(87) Numéro de publication internationale: WO 2008/068433

(56) Documents cités:
- JP-A- 57 162 972
- JP-A- 2002 252 959
- US-A1- 2003 026 701
- US-A1- 2006 170 888

## Description

La présente invention concerne un procédé d'amortissement du déplacement sous l'action d'une force extérieure d'au moins un piston d'un moteur électrodynamique linéaire. L'invention concerne également un circuit d'alimentation d'une bobine d'induction d'un moteur électrodynamique linéaire pour la mise en oeuvre dudit procédé.

L'invention trouve une application particulièrement avantageuse dans le domaine des machines cryogéniques à cycle alterné, machines Stirling ou tubes à gaz pulsé, mettant en oeuvre des moteurs électrodynamiques linéaires à pistons, et plus spécialement les machines cryogéniques destinées à être embarquées dans des engins spatiaux tels que les satellites d'observation de la Terre. Dans cette application, les moteurs électrodynamiques linéaires jouent le rôle de compresseur du fluide utilisé, de l'hélium par exemple.

Le principe de fonctionnement d'un moteur électrodynamique linéaire est basé sur la génération par des bobines d'induction de forces magnétiques cycliques qui viennent animer d'un mouvement rectiligne au moins une masse mobile, ou piston, montée sur un palier mécanique, lequel développe du fait de sa construction une force de rappel élastique axiale proportionnelle au déplacement du piston. Ce dernier est donc caractérisé par une fréquence de résonance mécanique déterminée par la masse mobile, la raideur du palier, la raideur magnétique et la charge fluidique.

Le pilotage du moteur consiste alors à appliquer aux bobines d'induction un courant d'excitation à la fréquence de résonance mécanique du piston et de son palier, de manière à obtenir une amplification naturelle du mouvement de déplacement du piston.

Cependant, l'efficacité d'un tel mécanisme dépend en grande partie des forces d'amortissement, notamment de frottement, qui tendent à s'opposer au mouvement du piston proportionnellement à sa vitesse. En effet, la performance optimale est obtenue lorsque l'amplification naturelle à la résonance mécanique est maximale, c'est-à-dire lorsque les forces d'amortissement du piston sont minimales. C'est pourquoi de gros efforts ont été faits, lors de la conception de ce type de moteurs, pour minimiser les causes d'amortissement au niveau du piston.

Il en résulte, par conséquent, que de tels moteurs présentent des propriétés d'amortissement très réduites, ce qui les rend particulièrement sensibles aux sollicitations mécaniques externes, vibrations et chocs notamment. En effet, toute vibration ou choc appliqué aux interfaces du moteur, proche de la fréquence de résonance mécanique, se trouve amplifié par le piston. Ceci se traduit par des oscillations du piston de forte amplitude, supérieure aux limites physiques imposées par les dimensions du compresseur. Des chocs internes peuvent alors se produire entre le piston et les butées mécaniques du compresseur, engendrant ainsi différents types de dommage susceptibles d'altérer les performances du moteur en termes d'efficacité et de durée de vie.

On comprend que ces inconvénients soient particulièrement préjudiciables dans le cas de moteurs devant être embarqués dans des engins spatiaux. L'environnement mécanique sévère durant le lancement des engins induit en effet des vibrations et des chocs répétés des pistons des moteurs contre le carter des compresseurs. De plus, compte tenu des durées de vie demandées, de 5 à 10 ans, il est non seulement nécessaire de franchir sans dommage l'étape de lancement, mais aussi d'assurer un fonctionnement optimal pendant la durée complète de la mission. Or, les chocs subis pendant la durée du lancement ne permettent pas de garantir ces objectifs et constituent une cause potentielle d'échec de la mission.

Différentes solutions ont déjà été proposées pour limiter le déplacement des pistons de moteurs électrodynamiques linéaires lorsqu'ils sont sollicités par des forces extérieures, telles que chocs et vibrations.

Une première solution consiste à court-circuiter les bobines d'induction du moteur. Lorsque le piston est mis en mouvement par des charges mécaniques externes, le flux magnétique dans les bobines varie, et, si les bobines sont court-circuitées, une force contre-électromotrice apparaît dans les bobines selon la loi de Lenz et génère une force magnétique qui s'oppose au déplacement du piston, ce qui crée un amortissement.

Cependant, dans cette solution connue, la force magnétique générée reste faible et insuffisante pour amortir les hauts niveaux vibratoires, d'autant qu'elle est définie par les dimensions physiques fixes des bobines et des aimants et n'est donc pas ajustable.

Une deuxième solution propose d'implémenter dans le compresseur des capteurs de position pour connaître à tout moment la position et la vitesse des pistons. Une électronique de pilotage interprète ces informations et fournit l'énergie électrique nécessaire pour maintenir les pistons à leur position neutre.

Les inconvénients de cette solution sont une implémentation de capteurs de position difficile, coûteuse et risquée en termes de fiabilité et de durée de vie, ainsi qu'une électronique de contrôle complexe et également coûteuse.

Une troisième solution consiste à introduire dans le compresseur un mécanisme de blocage du piston.

Cette dernière solution est très difficile à réaliser en pratique et risquée en terme de fiabilité.

Aussi, un but de l'invention est de proposer un procédé d'amortissement du déplacement sous l'action d'une force extérieure d'au moins un piston d'un moteur électrodynamique linéaire comprenant au moins une bobine d'induction à laquelle le piston est magnétiquement couplé, qui permettrait d'obtenir que l'amplitude de la force d'amortissement générée soit ajustable à l'intensité de la force extérieure appliquée au piston, même lorsque cette intensité est très élevée, et ceci sans avoir recours à une implantation intrusive d'équipements supplémentaires, tels que des capteurs de position ou de vitesse.

Ce but est atteint, conformément à l'invention, du fait que ledit procédé comprend les étapes consistant à :
- détecter dans ladite bobine d'induction un courant induit par ledit déplacement du piston,
- générer et appliquer à la bobine d'induction un courant d'amortissement amplifié par rapport audit courant induit, le procédé comportant une limitation du déplacement du piston causé par les vibrations et chocs réalisée en introduisant un amortisseur actif additionnel du mouvement du piston, l'amortissement actif additionnel étant réalisé par le biais d'un moteur qui génère une force magnétique qui s'oppose au mouvement du piston, proportionnellement à sa vitesse.

De même, un moteur électrodynamique linéaire pour la mise en oeuvre du procédé selon l'invention, est défini par la revendication 2.

Ainsi, on comprend que l'invention permet de limiter le déplacement du piston dû aux vibrations et aux chocs en introduisant un amortissement actif du mouvement du piston. Cet amortissement additionnel est réalisé par le biais du moteur qui génère une force magnétique qui s'oppose au mouvement du piston proportionnellement à sa vitesse. Il ne s'agit donc pas d'un contrôle actif du déplacement du piston, au moyen de capteurs par exemple, mais d'une force d'amortissement autorégulée qui s'amplifie avec la vitesse de déplacement du piston.

On remarquera également que l'amortissement recherché est réalisé par un dispositif externe au moteur, ne nécessitant aucun aménagement intérieur particulier ni aucun mécanisme pouvant en diminuer la fiabilité.

En outre, le circuit électronique associé est réduit à une chaîne d'amplification simple de conception et peu coûteuse en comparaison avec une électronique de contrôle dédiée.

La description qui va suivre en regard des dessins annexés, donnés à titre d'exemples non limitatifs, fera bien comprendre en quoi consiste l'invention et comment elle peut être réalisée.
La figure 1 est une vue en coupe simplifiée d'un moteur électrodynamique linéaire.
La figure 2 est un schéma d'un circuit d'alimentation des bobines d'induction du moteur de la figure 1.
La figure 3 est un graphe donnant le déplacement du piston en échelle logarithmique en fonction de la fréquence de vibration pour plusieurs valeurs du gain G.

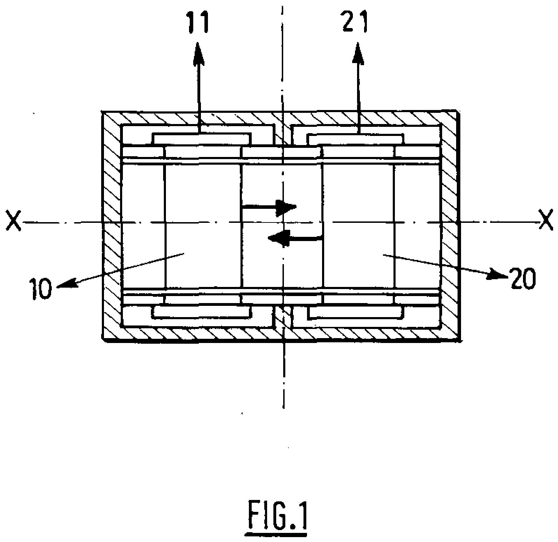

Sur la figure 1 est représenté un moteur électrodynamique linéaire destiné par exemple à être intégré en tant que compresseur dans une machine cryogénique à cycle alterné du type Stirling, tube à gaz pulsé ou autre, et machines cryogéniques à flux continu du type Joule-Thomson. Le moteur de la figure 1 comporte deux pistons 10, 20 chargés de comprimer un fluide cryogénique, comme de l'hélium.

En fonctionnement, les deux pistons 10, 20 se déplacent en sens contraire parallèlement à l'axe X-X du moteur selon un mouvement alternatif dont la fréquence est choisie sensiblement égale à la fréquence f₀ de résonance de l'ensemble électromoteur et sa charge fluidique, cette fréquence f₀ étant définie essentiellement par la masse mobile, la raideur des paliers, la raideur magnétique et la charge fluidique. Une valeur typique de fréquence de résonance est par exemple de 50 Hz. A cette fréquence, l'amplitude du mouvement des pistons est alors maximale et n'est limitée que par les forces d'amortissement dues aux divers frottements mécaniques, lesquels sont rendus les plus faibles possible pour une efficacité maximale du moteur.

Par ailleurs, le mouvement alternatif des pistons est obtenu en appliquant à des bobines 11, 21 d'induction un courant d'excitation périodique à la fréquence f₀ de résonance, ici de 40 Hz. Le couplage magnétique des pistons 10, 20 avec les bobines 11, 21 est réalisé au moyen d'aimants permanents portés par les pistons.

Hors fonctionnement, en particulier au cours de la phase de lancement d'un engin spatial dans lequel le moteur de la figure 1 est embarqué, les pistons sont libres, et, de ce fait, peuvent être le siège de forces extérieures de vibrations et de chocs dont la composante à une fréquence f₁ de résonance, correspondant à un cas sans charge fluidique, est naturellement amplifiée, ceci d'autant plus que l'amortissement est très faible du fait que dans cette configuration la charge fluidique sur le compresseur est négligeable. Tout se passe comme si le compresseur ne contenait pas de fluide susceptible d'opposer une résistance hydrodynamique au mouvement des pistons. L'amplitude du déplacement des pistons devient alors très importante, dépassant la course maximale autorisée. Il en résulte un risque de chocs des pistons contre les butées mécaniques du compresseur, ce qui peut entraîner de sérieuses dégradations des performances du moteur.

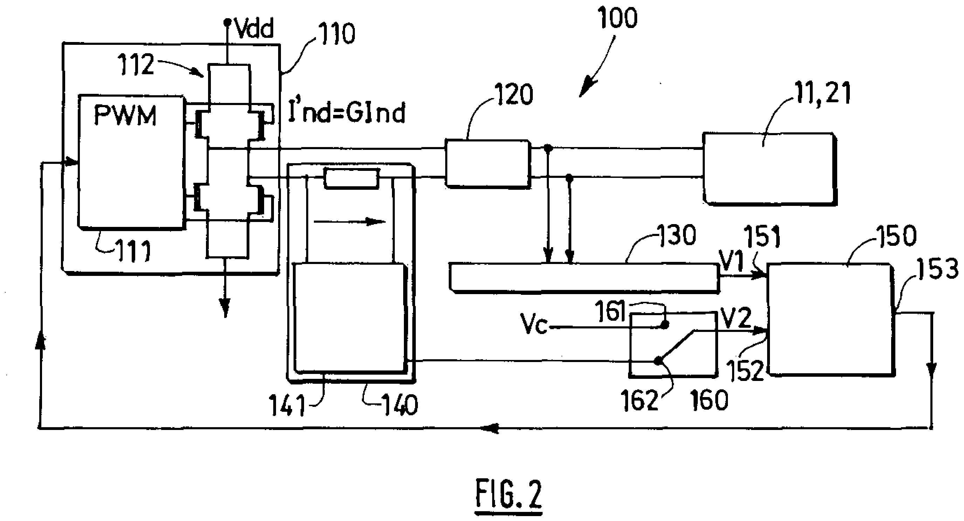

Afin de remédier à cette situation, l'invention propose d'utiliser un circuit d'alimentation des bobines 11, 21 d'induction du type de celui représenté sur la figure 2.

D'une manière générale, ce circuit permet, d'une part, de fournir aux bobines le courant d'excitation nécessaire au fonctionnement nominal du moteur, et, d'autre part, d'amortir le déplacement des pistons lorsque le moteur est hors fonctionnement, les pistons étant montés libres, lors d'une phase de lancement par exemple. L'amortissement du déplacement des pistons est obtenu par la mise en oeuvre d'un procédé consistant dans un premier temps à détecter dans les bobines 11, 21 d'induction un courant induit par le déplacement des pistons, puis à générer et appliquer aux bobines d'induction un courant d'amortissement amplifié par rapport au courant induit. Ce courant d'amortissement produit sur les pistons une force électromagnétique opposée au mouvement et dont l'amplitude varie proportionnellement à la vitesse de déplacement des pistons avec un coefficient de proportionnalité égal au gain d'amplification appliqué. Il s'agit donc d'un mécanisme d'amortissement autorégulé et ajustable dont le gain peut être choisi à volonté en fonction des caractéristiques du moteur et de l'environnement considéré.

A cet effet, le circuit 100 d'alimentation de la figure 2 comprend une source 110 de tension comprenant un étage 111 de modulation PWM (« Pulse Wave Modulation ») destiné à commander la commutation d'un étage 112 de transistors MOSFET.

En fonctionnement nominal du moteur, c'est-à-dire par exemple lors d'une mission spatiale, la source 110 de tension fournit aux bobines 11, 21 le courant d'excitation nécessaire au déplacement des pistons 10, 20. Le courant délivré par la source 110 est donc filtré à la fréquence f₀ de résonance des pistons par un filtre 120 centré autour de cette fréquence.

Quel que soit le mode de fonctionnement du moteur, nominal ou en phase de lancement, un premier module 130 de détection de la tension de sortie fournit sur une première borne 151 d'entrée d'un amplificateur différentiel 150 un premier signal V₁ de tension, proportionnel au courant d'excitation.

Une seconde borne 152 de l'amplificateur différentiel 150 reçoit un deuxième signal V₂ de tension qui dépend du mode de fonctionnement considéré.

En fonctionnement nominal, le commutateur 160 est placé sur la position 161 et le signal V₂ est une tension V_{c} de consigne à la fréquence f₀ de résonance. La valeur de cette tension V_{c} est définie en fonction des besoins de puissance requise. On comprend que, si la tension V₁ de sortie devient différente de sa valeur de consigne V₂(=V_{c}), l'amplificateur différentiel 150 fournit sur une borne 153 de sortie un signal d'erreur apte à commander la source 110 de tension de manière à ramener la tension V₁ de sortie à sa valeur nominale de consigne V₂(=V_{c}). Le circuit 100 d'alimentation fonctionne donc en boucle d'asservissement sur la tension V₁ de sortie.

En phase de lancement, le commutateur 160 est placé sur la position 162 et le deuxième signal V₂ de tension est cette fois fourni par un deuxième module 140 de détection de courant comprenant une résistance Rₛ de shunt placée sur le circuit d'alimentation. Le courant traversant par la résistance Rₛ est transformé en une tension, laquelle est amplifiée par un amplificateur différentiel 141. Cette tension V₂ est alors comparée à la tension V₁ de sortie de la même façon que dans le cas d'un fonctionnement nominal. Ainsi, lorsque les pistons 10, 20 se déplacent sous l'effet de vibrations ou de chocs pendant la phase de lancement, un courant induit I_{ind} est produit dans les bobines11, 21 selon la loi de Lenz. Le module 140 détecte ce courant induit et fournit sur la borne d'entrée de l'amplificateur différentiel 150 la tension V₂ correspondante. La source 110 de tension reçoit alors de l'amplificateur différentiel 150 un signal d'erreur entre la tension V₁ de sortie et la tension V₂. La source 110 de tension fournit alors aux bobines 11, 21 la tension correspondante à un courant d'excitation I'_{ind}=G.I_{ind} amplifié d'un facteur de gain G par rapport au courant induit I_{ind}. Ce courant d'excitation amplifié exerce sur les pistons 10, 20 une force de Laplace s'opposant à leur mouvement. Il en résulte un amortissement du déplacement des pistons d'autant plus grand que le gain G d'amplification est grand. Le circuit 100 d'alimentation fonctionne dans ce cas en boucle d'autorégulation ajustable en fonction du gain G. La valeur du gain G à utiliser est définie par le constructeur à partir des caractéristiques techniques du moteur et de l'environnement considéré.

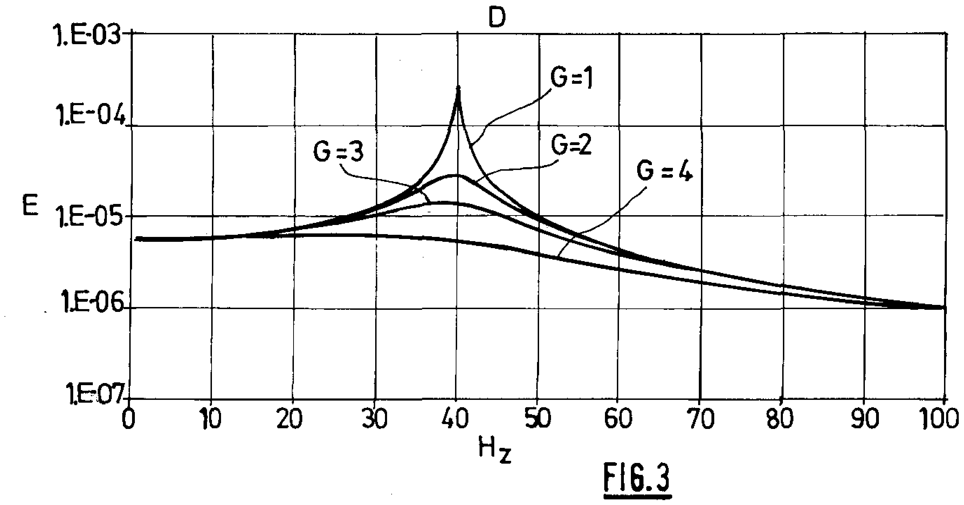

Le graphe de la figure 3 montre l'amortissement du déplacement des pistons en fonction de la fréquence et du gain G, la fréquence f₁ de résonance étant de 40 Hz. On constate qu'en effet l'amortissement augmente lorsque le gain augmente.

## Revendications

1. Procédé d'amortissement du déplacement sous l'action d'une force extérieure d'au moins un piston (10, 20) d'un moteur électrodynamique linéaire comprenant au moins une bobine (11, 21) d'induction à laquelle le piston est magnétiquement couplé, **caractérisé en ce que** ledit procédé comprend les étapes consistant à :
- détecter dans ladite bobine d'induction un courant induit (I_{ind}) par ledit déplacement du piston,
- générer et appliquer à la bobine (11, 21) d'induction un courant (I'_{ind}) d'amortissement amplifié par rapport audit courant induit et **en ce qu'**il comporte une limitation du déplacement du piston causé par les vibrations et chocs réalisée en introduisant un amortisseur actif additionnel du mouvement du piston, l'amortisseur actif additionnel étant réalisé par le biais d'un moteur qui génère une force magnétique qui s'oppose au mouvement du piston, proportionnellement à sa vitesse

2. Moteur électrodynamique linéaire comprenant une bobine (11, 21) d'induction et un circuit d'alimentation de la au moins une bobine (11, 21) d'induction du moteur électrodynamique linéaire pour la mise en oeuvre du procédé selon la revendication 1, le moteur comportant deux pistons (10, 20) chargés de comprimer un fluide cryogénique, les pistons étant couplés magnétiquement avec les bobines (11, 21) via des aimants permanents portés par les pistons, le moteur possédant deux modes : « en fonctionnement » et « hors fonctionnement », le circuit étant configuré pour fournir aux bobines le courant d'excitation nécessaire en mode « en fonctionnement » ou pour amortir le déplacement des pistons lorsque le moteur est « hors fonctionnement », en fonctionnement, les deux pistons se déplaçant en sens contraire parallèlement à un axe X-X du moteur selon un mouvement alternatif dont la fréquence f0 est choisie sensiblement égale à la fréquence f0 de résonnance de l'ensemble électromoteur et sa charge fluidique, le mouvement alternatif des pistons étant obtenu en appliquant aux bobines (11, 21) d'induction un courant d'excitation périodique à la fréquence f0 de resonnance; hors fonctionnement, les pistons étant libres, **caractérisé en ce que** ledit circuit (100) d'alimentation comprend :
- une source (110) de tension destinée à fournir un courant d'excitation à ladite bobine (11, 21) d'induction,
- un premier module (130) de détection de courant apte à fournir un premier signal (V1) proportionnel audit courant d'excitation,
- un deuxième module (140) de détection de courant fournissant uniquement en mode hors fonctionnement un deuxième signal (V2) proportionnel à un courant amplifié par rapport audit courant d'excitation,
- un amplificateur différentiel (150) apte dans le mode hors fonctionnement à fournir et appliquer à ladite source (110) de tension un signal de commande proportionnel à la différence entre lesdits premier et deuxième signaux fournis respectivement par lesdits premier (130) et deuxième (140) modules de détection.

3. Moteur selon la revendication 2, le moteur étant destiné a être embarqué dans un engin spatial destiné à faire l'objet d'une phase de lancement, caractérisé en ce lorsque les pistons (10, 20) se déplacent sous l'effet de vibrations ou de chocs hors fonctionnement pendant une phase de lancement, un courant induit (I_{ind}) est produit dans les bobines (11, 21) selon la loi de Lenz, la source (110) de tension fournissant alors aux bobines (11, 21) la tension correspondante à un courant d'excitation (I'_{ind}) = G.(I_{ind}) amplifié d'un facteur de gain G par rapport au courant induit (I_{ind}), ce courant d'excitation amplifié exerçant ainsi sur les pistons (10, 20) une force de Laplace s'opposant à leur mouvement.

4. Moteur selon la revendication 3, **caractérisé en ce que** le circuit (100) d'alimentation fonctionne en boucle d'autorégulation ajustable en fonction du gain G.

5. Application du procédé selon la revendication 1 à des moteurs électrodynamiques linéaires embarqués dans des engins spatiaux.

## Patentansprüche

1. Verfahren zum Dämpfen der Verschiebung mindestens eines Kolbens (10, 20) eines elektrodynamischen Linearmotors unter dem Einfluss einer externen Kraft, der mindestens eine Induktionsspule (11, 21) umfasst, mit welcher der Kolben magnetisch gekoppelt ist, **dadurch gekennzeichnet, dass** das Verfahren die Schritte umfasst, bestehend aus:
- Erfassen in der Induktionsspule eines induzierten Stroms (I_{ind}) durch die Kolbenverschiebung,
- Erzeugen und Aufbringen auf die Induktionsspule (11, 21) eines verstärkten Dämpfungsstroms (I'_{ind}) in Bezug auf den induzierten Strom und dadurch, dass er eine Begrenzung der durch die Vibrationen und Stöße verursachten Kolbenverschiebung beinhaltet, die durch die Einführung eines zusätzlichen aktiven Dämpfers der Kolbenbewegung erreicht werden, wobei der zusätzliche aktive Dämpfer durch einen Motor erreicht wird, der eine Magnetkraft erzeugt, die der Kolbenbewegung entgegenwirkt, proportional zu seiner Geschwindigkeit.

2. Elektrodynamischer Linearmotor, eine Induktionsspule (11, 21) und ein Kreis zur Versorgung der mindestens einen Induktionsspule (11, 21) des elektrodynamischen Linearmotors umfassend, zur Durchführung des Verfahrens nach Anspruch 1, wobei der Motor zwei Kolben (10, 20) beinhaltet, die mit dem Verdichten eines kryogenen Fluids beauftragt ist, wobei die Kolben über von den Kolben getragene Permanentmagnete magnetisch mit den Spulen (11, 21) gekoppelt sind und der Motor zwei Modi besitzt: "in Betrieb" und "außer Betrieb", wobei der Kreis konfiguriert ist, um die Spulen im "in Betrieb"-Modus mit dem erforderlichen Erregerstrom zu versorgen oder die Verschiebung der Kolben zu dämpfen, wenn der Motor "außer Betrieb" ist, wobei sich die beiden Kolben in Betrieb parallel zu einer X-X-Achse des Motors in einer Hin- und Herbewegung gegensinnig bewegen, deren Frequenz f0 im Wesentlichen gleich der Resonanzfrequenz f0 der Elektromotoranordnung und ihrer Fluidladung gewählt ist, wobei die Hin- und Herbewegung der Kolben erhalten wird, indem an die Induktionsspulen (11, 21) ein periodischer Erregerstrom bei der Resonanzfrequenz f0 angelegt wird; wobei außer Betrieb die Kolben frei sind, **dadurch gekennzeichnet, dass** der Versorgungskreis (100) Folgendes umfasst:
- eine Spannungsquelle (110), die zum Versorgen der Induktionsspule (11, 21) mit einem Erregerstrom bestimmt ist,
- ein erstes Stromerfassungsmodul (130), das in der Lage ist, ein erstes Signal (V1) proportional zum Erregerstrom zu liefern,
- ein zweites Stromerfassungsmodul (140), das nur im außer-Betrieb-Modus ein zweites Signal (V2) versorgt, das proportional zu einem verstärkten Strom in Bezug auf den Erregerstrom ist,
- einen Differenzverstärker (150), der im außer-Betrieb-Modus in der Lage ist, die Spannungsquelle (110) mit einem Steuersignal proportional zur Differenz zwischen dem ersten und dem zweiten Signal zu versorgen und dieses anzulegen, die jeweils von dem ersten (130) und dem zweiten (140) Erfassungsmodul geliefert werden.

3. Motor nach Anspruch 2, wobei der Motor dazu bestimmt ist, in ein Raumfahrzeug eingebaut zu werden, dazu bestimmt, für eine Startphase eingesetzt zu werden, **dadurch gekennzeichnet, dass**, wenn sich die Kolben (10, 20) unter dem Einfluss von Vibrationen oder Stößen außer Betrieb während einer Startphase verschieben, in den Spulen (11, 21) nach dem Lenz-Gesetz ein induzierter Strom (I_{ind}) erzeugt wird, wobei die Spannungsquelle (110) dann die Spulen (11, 21) mit der einem Erregerstrom (I'_{ind}) = G.(I_{ind}) entsprechenden Spannung versorgt, verstärkt durch einen Verstärkungsfaktor G in Bezug auf den induzierten Strom (I_{ind}), wobei dieser verstärkte Erregerstrom auf die Kolben (10, 20) eine Laplace-Kraft ausübt, die ihrer Bewegung entgegenwirkt.

4. Motor nach Anspruch 3, **dadurch gekennzeichnet, dass** der Versorgungskreis (100) in einer selbstregelnden Schleife arbeitet, die in Abhängigkeit von der Verstärkung G einstellbar ist.

5. Anwendung des Verfahrens nach Anspruch 1 auf in Raumfahrzeugen eingebaute elektrodynamische Linearmotoren.

## Claims

1. Method for absorbing the displacement under the influence of an external force of at least one piston (10,20) of a linear electrodynamic motor comprising at least one induction coil (11, 21) to which the piston is magnetically coupled, **characterised in that** said method comprises the steps consisting of:
- detecting in said induction coil a current induced (I_{ind}) by said displacement of the piston,
- generating and applying to the induction coil (11, 21) a damping current (I'_{ind}) amplified with respect to the induced current and **in that** it comprises a limitation of the displacement of the piston caused by the vibrations and impacts created by introducing an additional active damper of the movement of the piston, the additional active damper being created by means of a motor that generates a magnetic force that opposes the movement of the piston, in proportion to the speed thereof.

2. Linear electrodynamic motor comprising an induction coil (11, 21) and a circuit for powering the at least one induction coil (11, 21) of the linear electrodynamic motor for the implementation of the method according to claim 1, the motor comprising two pistons (10, 20) in charge of compressing a cryogenic fluid, the pistons being magnetically coupled with the coils (11,21) via permanent magnets carried by the pistons, the motor having two modes: "operating" and "non-operating", with the circuit being configured to provide the coils with the excitation current required in "operating" mode or to dampen the displacement of the pistons when the motor is in "non-operating" mode, when operating, the two pistons are displaced in the opposite direction parallel to an X-X axis of the motor according to an alternating movement of which the frequency f0 is chosen substantially equal to the resonance frequency f0 of the entire electromotor and the fluidic load thereof, with the alternating movement of the pistons being obtained by applying to the induction coils (11, 21) a periodic excitation current at the resonance frequency f0; when not operating, the pistons being free, **characterised in that** said circuit (100) for powering comprises:
- a source (110) of voltage intended to provide an excitation current to said induction coil (11, 21),
- a first module (130) for detecting current capable of supplying a first signal (V1) proportional to said excitation current,
- a second module (140) for detecting current that supplies only during non-operating mode a second signal (V2) proportional to a current that is amplified with respect to said excitation current,
- a differential amplifier (150) capable of, in the non-operating mode to supply and apply to said source (110) of voltage a control signal proportional to the difference between said first and second signals provided respectively by said first (130) and second (140) detection modules.

3. Motor according to claim 2, the motor being intended to be onboard a spacecraft intended to be the object of a launch phase, **characterised in that** the pistons (10, 20) are displaced under the effect of vibrations or impacts when not operating during a launch phase, an induced current (I_{ind}) is produced in the coils (11, 21) according to Lenz's Law, the source (110) of voltage then supplying to the coils (11, 21) the voltage that corresponds to an excitation current (I'_{ind}) = G.(I_{ind}) amplified by a gain factor G with respect to the induced current (I_{ind}), with this amplified excitation current thus exerting on the pistons (10, 20) a Laplace force that opposes the movement thereof.

4. Motor according to claim 3, **characterised in that** the circuit (100) for powering operates in an adjustable self-regulating loop according to the gain G.

5. Application of the method according to claim 1 to linear electrodynamic motors onboard spacecraft.
